# EUROPEAN PATENT SPECIFICATION

(11) **EP 1 859 156 B1**
(45) Date of publication and mention of the grant of the patent: **26.08.2009**
(21) Application number: 06708569.6
(22) Date of filing: 28.02.2006
(51) Int. Cl.: F02M 25/07

(54) **BY-PASS AND EGR INTEGRATED VALVE**
BYPASS- UND ABGASREZIRKULATIONSVENTIL
DÉRIVATION ET VANNE INTEGRÉE À RECIRCULATION DES GAZ D ÉCHAPPEMENT

(30) Priority: 01.03.2005 ES 200500467 P
(43) Date of publication of application: 28.11.2007
(73) Proprietor: Dytech Ensa, S.L., 36315 Vigo, Pontevedra (ES)
(72) Inventor: CASTAÑO GONZALES, Carlos Manuel, E-36315 Vigo, Pontevedra (ES)
(74) Representative: Jorio, Paolo
(86) International application number: PCT/EP2006/060344
(87) International publication number: WO 2006/092401

(56) References cited:
- DE-A1- 19 733 964
- FR-A- 2 827 011

## Description

### FIELD OF THE INVENTION

The present invention refers to a valve integrating a by-pass function and a regulating function in one part, and more particularly to a valve for fulfilling these two functions in an exhaust gas recirculation (EGR) system of an internal combustion engine.

### BACKGROUND OF THE INVENTION

Different exhaust gas recirculation systems in internal combustion engines, called EGR systems, are known in the current state of the art.

These systems recirculate exhaust gases from the exhaust manifold to the intake manifold of the engine after subjecting them to a cooling process for the purpose of reducing the amount of NOx emissions.

As the cooling of the exhaust gases is not appropriate in certain operating conditions of the engine, the use of by-pass pipes has been proposed in the art, allowing the recirculation of exhaust gases without passing through the heat exchanger under the control of a valve channeling the exhaust gases either towards the heat exchanger or else towards said by-pass pipe, according to pre-established conditions. Different proposals for by-pass valves are known in this sense, such as those disclosed in patent EP 0 971 427 B1 and in patent applications WO 03/085252 A2, WO 03/062625 A1, EP 1 291 509 A2 and EP 1 355 058 A2.

On the other hand, different types of valves used for controlling the amount of gas to recirculate, generally referred to as EGR valves, are known in the state of the art.

DE-A-197 33 964 discloses an integrated bypass and EGR valve having the features of the preamble of claim 1. This valve allows the EGR gas flow to be routed either through a bypass duct or a heath exchanger, but does not provide for any intermediate configuration whereby flow is admitted through both of the aforesaid routes at the same time.

An object of the present invention is to devise an improved integrated bypass and EGR valve which solves the above problem.

### SUMMARY OF THE INVENTION

The present invention proposes a by-pass valve and integrated EGR for regulating the passage of a gas from an inlet area to two outlet areas or from two inlet areas to an outlet area, comprising the following main elements:
- A body with an internal chamber where the inlet gas is received through one/two inlet passage/passages, coming from the inlet area/areas, and directed towards one/two outlet passage/passages leading to the outlet area/areas. The internal chamber has two inlet/outlet openings, the opening/closing of which constitutes the objective of the valve.
- A closing member formed by a pin that can be axially actuated by means of an actuator with two plates for opening/closing said openings joined by a spring, the plate-spring assembly being able to be shifted along the pin between two stops fixed thereto.
- A bellows joined to the two plates and demarcating an enclosure with the pin inside and a pneumatic actuator which allows regulating the pressure inside said enclosure so as to change the axial dimension of the bellows and therefore the distance between the two plates.

When this pneumatic actuator creates a vacuum inside the enclosure, the bellows is compressed, making the plates approach one another, enabling the simultaneous opening of the two openings of the valve.

Other features and advantages of the present invention can be gathered from the following detailed description of an illustrative and by no means limiting embodiment of its object in relation to the attached drawings.

### DESCRIPTION OF THE DRAWINGS

Figures 1 and 2 show perspective views, from different positions, of a valve according to the present invention without the claimed bellows with an inlet area and two outlet areas.
Figures 3a, 3b and 3c are cross sectional views of the valve represented in Figures 1 and 2 when the valve is closed and when it is open towards both outlet passages, respectively.
Figures 4a, 4b and 4c show cross sectional views of a valve according to the present invention without the claimed bellows with two inlet areas and one outlet area when the valve is closed and when it is open for both of the inlet passages, respectively.
Figure 5 shows a perspective view of a valve according to the present invention without the claimed bellows with one inlet or outlet area in its lower portion.
Figure 6 shows a cross sectional view of the valve represented in Figure 5.
Figure 7 shows a perspective view of a detail of the valve of figures 1 and 2, wherein the closing member further includes a bellows joining the plates.
Figure 8 shows a cross sectional view of the valve represented in Figure 7 in a situation in which the two openings of the valves are open.

### DETAILED DESCRIPTION OF THE INVENTION

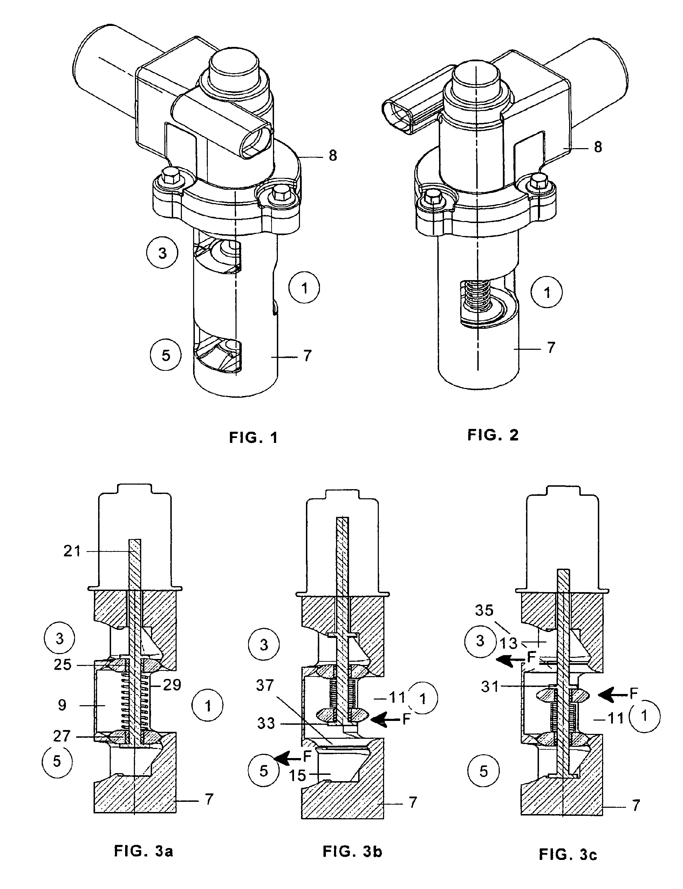

In the embodiment of the invention which will first be described in reference to Figures 1-3 and 7,8, it can be seen that the valve according to the invention is formed by a body 7 internally housing a pin 21 incorporating two plates 25, 27 coupled thereto, joined by a spring 29, between two stops 31, 33.

An internal chamber 9, a gas inlet passage 11 leading to the valve from the inlet area 1 and two gas outlet passages 13, 15 leading to the outlet areas 3, 5, and two openings 35, 37 communicating the chamber 9 with the outlet passages 13, 15 can be observed on the body 7.

The pin 21 is actuated by means of an actuator (not represented) housed in the block 8 and adapted to shift the pin 21 upwards and downwards in order to open the openings 35, 37 as will be better described hereafter.

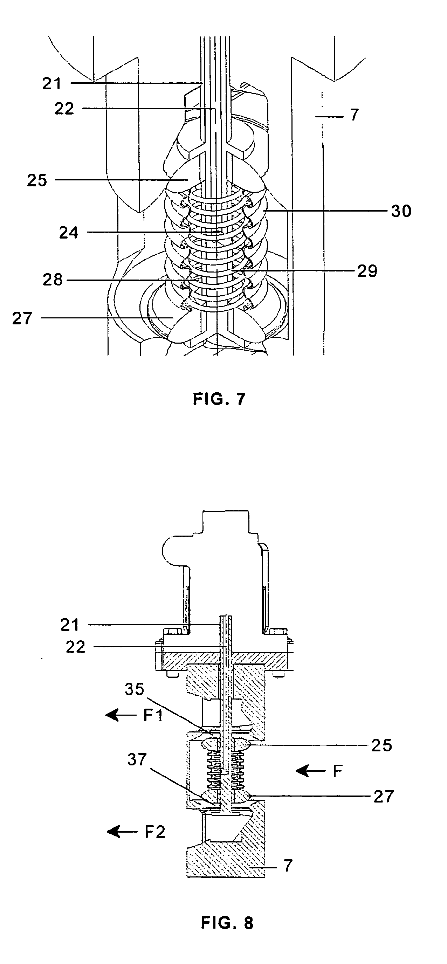

With particular reference to Figures 7 and 8, it is observed that the closing member includes a bellows 30 joined to the plates 25, 27, demarcating an enclosure 28 with the pin 21 inside. A pneumatic actuator (not represented) can create a vacuum in the enclosure 28 through the passage 22 arranged inside the pin 21 and ending within it at the elbow 24, causing a variation in the axial dimension of the bellows 30 which allows, as particularly shown in Figure 8, the simultaneous opening of the two inlet openings 35, 37.

For its part, with respect to the actuator axially actuating the pin 21, the bellows 30 behaves similarly to the spring 29.

Both actuators can function independently or simultaneously according to the desired results.

The bellows 30 is not represented in figures 3a, 3b, 3c as it exercises no relevant function in this situation in which the pneumatic actuator is inactive.

As shown in Figure 3a, when the valve is closed the two plates close the openings 35, 37 as a result of the force of the spring 29.

As is shown in Figure 3b, in order to open the valve so that the inlet gas exits through the outlet passage 15 following the arrow F, the pin 21 is actuated by means of the actuator so that it shifts upwards with enough force so that the stop 33 drags the plate 27, overcoming the strength of the spring 29. In this embodiment, the other stop 31 limits the movement of the pin 21 as it comes into contact with the body 7, but the end of the run is not necessarily defined by the stop, but the actuator can determine it in other manners. The plate 27 can therefore be located between the rest position represented in Figure 3a and the maximal opening position represented in Figure 3b, controlling the amount of gas through the magnitude of its shifting.

Similarly and according to Figure 3c, in order to open the valve so that the inlet gas exits through the outlet passage 13 following arrow F, the pin 21 is actuated by means of said actuator which shifts downwards with enough force so that the stop 31 drags the plate 25 overcoming the strength of the spring 29. The other stop 33 limits the movement of the pin 21 as it comes into contact with the body 7 in this embodiment, but as was previously indicated, it may be determined by the actuator itself. The plate 25 can therefore be located between the rest position represented in Figure 3a and the maximal opening position represented in Figure 3c, controlling the amount of gas through the magnitude of its shifting.

This valve with one inlet area and two outlet areas is particularly applicable for an EGR system heat exchanger with a by-pass pipe, the inlet area 1 being connected to the exhaust manifold and the outlet areas 3, 5 to the cooling module and to the by-pass pipe.

Four possible situations of a valve with one inlet area and two outlet areas for an EGR system heat exchanger with a by-pass pipe will be described below as an example:
- Full power engine operation: Valve is closed. The two outlet openings 35, 37 leading towards, respectively, the cooling module and the by-pass pipe are closed as they are in contact with the plates 25, 27 due to the effect of the spring 29.
- Engine warm-up phase: The outlet opening 35 leading towards the cooling module is closed and the outlet opening 37 leading towards the by-pass pipe is open due to the effect of the actuator moving the pin 21 in combination with the stop 33 dragging the plate 27
- Motor regulating phase: The two openings 35, 37 are open due to the effect of the pneumatic actuator (Figure 8, wherein the vacuum created by the pneumatic actuator in the enclosure 28 makes the plates 25, 27 approach one another, overcoming the strength of the spring 29). In this situation, the other actuator can also be actuated so as to distribute the gas F through the two outlet openings 35, 37 in the desired ratio between the flow F1 exiting towards the cooling module and the flow F2 exiting towards the by-pass pipe.
- Hot engine phase: The outlet opening 35 leading to the cooling module is open and the outlet opening 37 leading to the by-pass pipe is closed due to the effect of the actuator moving the pin 21 in combination with the stop 31 dragging the plate 25.

An additional advantage of the invention is that the bellows 30 exercises a function of protecting the pin 21 from corrosion and preventing unwanted incrustation.

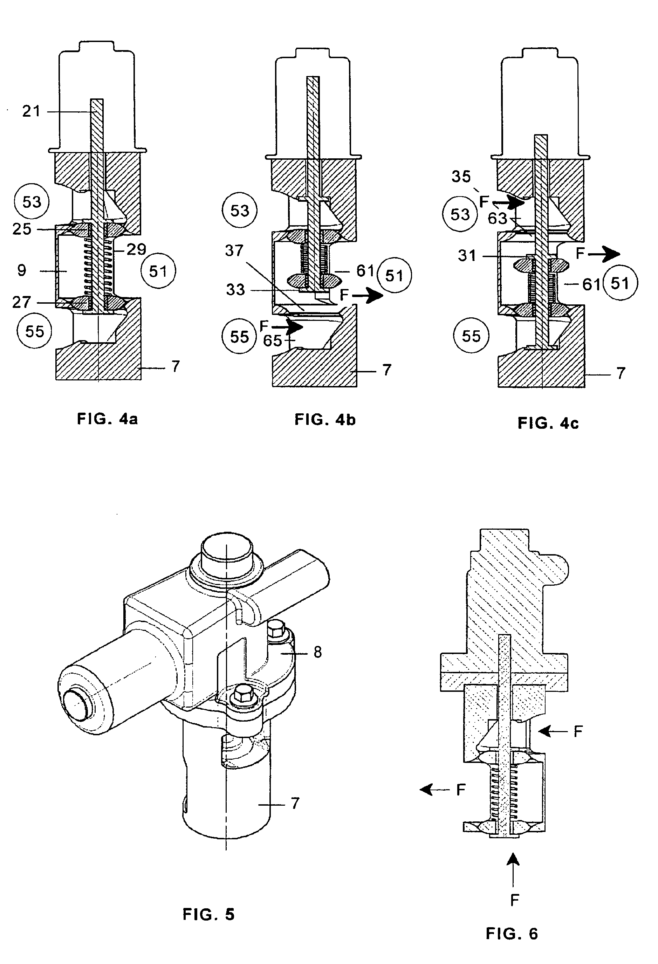

As previously indicated and according to that shown in Figure 4a, the valve can have two inlet areas 53, 55 and one outlet area 51. Figures 4b and 4c show the valve operation so that the gas passes from the inlet passage 65 to the outlet assembly 61 and from inlet passage 63 to the outlet passage 61 by means of a dynamic identical to that of the valve represented in the previous figures. Bellows 30 is again omitted.

This valve with two inlet areas and one outlet area is particularly applicable for an EGR system heat exchanger with a by-pass pipe, the two inlet areas 53, 55 being connected to the cooling module and to the by-pass pipe and the outlet area 51 to the intake manifold.

In the embodiment shown in Figures 5 and 6, one of the inlets/outlets is arranged in the lower portion but as can particularly be deduced from Figure 6, valve operation is identical to that explained above.

As the person skilled in the art will understand, the outer shape of the body 7 of the valve and of the block 8 joined to it suggests a shape that is "insertable" in the appropriate place of the EGR system and may require as many additional members necessary for carrying out the corresponding couplings.

With respect to the described embodiments of the invention, those modifications comprised within the scope defined by the following claims can be introduced.

## Claims

1. A valve for regulating the passage of a gas from an inlet area (1) to two outlet areas (3, 5), or from two inlet areas (53, 55) to an outlet area (51), comprising a body (7) with an internal chamber (9) where the inlet gas is received through the inlet passages (11; 63, 65) and is directed towards the outlet passages (13, 15; 61), and a member for closing the outlet passages (13, 15) or inlet passages (63, 65), respectively, in which
a) the closing member is formed by a pin (21) that can be axially actuated by means of an actuator, with two plates (25, 27) joined by a spring (29) and shiftable along the pin (21) between two stops (31, 33) fixed thereto;
b) the body (7) includes inlet/outlet openings (35, 37) leading to/coming from the chamber (9) cooperating with the plates (25, 27), which are located between them, for their opening and closing, using the force of the spring (29) to close the openings (35, 37) when the valve is closed, and using the shifting of the pin (21) in either direction so that one of the plates (25, 27) shifts when dragged by one of the stops (31, 33), opening one of the openings (35, 37) and keeping the other one closed,
**characterized in that** the closing member also comprises a bellows (30) joined to the two plates (25, 27) and demarcating an enclosure (28) with the pin (21) inside, and a pneumatic actuator which allows creating a vacuum inside said enclosure (28) so as to reduce the axial dimension of the bellows (30), allowing the simultaneous opening of the two openings (35, 37).

2. A valve according to claim 1, **characterized in that** the actuator has means for controlling the magnitude of shifting of the pin (21), facilitating a means of regulating the amount of gas passing through the opened opening.

3. A valve according to claim 1, **characterized in that** the pneumatic actuator acts on the enclosure (28) through a passage (22) arranged inside the pin (21) and ending inside it.

4. A valve according to any of the previous claims,
**characterized in that** the body (7) is configured so as to be coupled to an EGR system heat exchanger with a by-pass pipe, the inlet area (1) being connected to the exhaust manifold and the outlet areas (3, 5) to the cooling module and to the by-pass pipe.

5. A valve according to any of claims 1 to 3,
**characterized in that** the body (7) is configured so as to be coupled to an EGR system heat exchanger with a by-pass pipe, the two inlet areas (53, 55) being connected to the cooling module and to the by-pass pipe and the outlet area (51) to the intake manifold.

## Patentansprüche

1. Ventil zur Regulierung des Durchlasses eines Gases von einem Einlassbereich (1) zu zwei Auslassbereichen (3, 5), oder von zwei Einlassbereichen (53, 55) zu einem Auslassbereich (51), umfassend einen Körper (7) mit einer inneren Kammer (9), in der das Einlassgas durch die Einlassdurchlässe (11; 63, 65) aufgenommen wird und zu den Auslassdurchlässen (13, 15; 61) geleitet wird, und einem Element zum Schließen jeweils der Auslassdurchlässe (13, 15) oder Einlassdurchlässe (63, 65), in welchem
a) das Schließelement durch einen Stift (21) gebildet wird, der axial mittels eines Betätigungselementes betätigt werden kann, mit zwei Platten (25, 27), die über eine Feder (29) verbunden sind und entlang des Stiftes (21) verschiebbar zwischen zwei Stoppelementen (31, 33), die daran fixiert sind;
b) der Körper (7) Einlass-/Auslassöffnungen (35, 37) umfasst, die zu der Kammer (9) hinführen/von der Kammer (9) kommen, die mit den Platten (25, 27), welche zwischen diesen angeordnet sind, zu deren Öffnen und Schließen zusammenwirken, wobei die Kraft der Feder (29) verwendet wird, um die Öffnungen (35, 37) zu schließen, wenn das Ventil geschlossen ist, und das Verschieben des Stiftes (21) in beide Richtungen derart verwendet wird, so dass sich eine der Platten (25, 27) bewegt, wenn sie über eines der Stoppelemente (31, 33) festgehalten wird, wobei eine der Öffnungen (35, 37) geöffnet wird und die andere geschlossen gehalten wird
**dadurch gekennzeichnet, dass**
das Schließelement auch ein Ausgleichselement (30) umfasst, das mit den zwei Platten (25, 27) verbunden ist und das eine Einfassung (28) mit dem Stift (21) darin abgrenzt, und ein pneumatisches Betätigungselement, das es ermöglicht, ein Vakuum innerhalb der Einfassung (28) bereitzustellen, um so die axiale Abmessung des Ausgleichselements (30) zu reduzieren, was ein gleichzeitiges Öffnen der zwei Öffnungen (35, 37) ermöglicht.

2. Ventil nach Anspruch 1 **dadurch gekennzeichnet, dass** das Betätigungselement ein Mittel zur Kontrolle des Ausmaßes des Verschiebens des Stiftes (21) umfasst, welches ein Mittel zur Regulierung der Gasmenge bereitstellt, die durch die geöffnete Öffnung passiert.

3. Ventil nach Anspruch 1 **dadurch gekennzeichnet, dass** das pneumatische Betätigungselement auf die Einfassung (28) durch einen Durchlass (22) wirkt, der innerhalb des Stiftes (21) angeordnet ist und darin endet.

4. Ventil nach einem der vorstehenden Ansprüche **dadurch gekennzeichnet, dass** der Körper (7) derart konfiguriert ist, um an ein Wärmetauscher-EGR-System mit einer Bypass-Leitung gekoppelt zu werden, wobei der Einlassbereich (1) mit dem Auslaßverteiler verbunden ist und die Auslassbereiche (3, 5) mit dem Kühlmodul und mit der Bypass-Leitung verbunden sind.

5. Ventil nach einem der Ansprüche 1 bis 3, **dadurch gekennzeichnet, dass** der Körper (7) derart konfiguriert ist, um an ein Wärmetauscher-EGR-System mit einer Bypass-Leitung gekoppelt zu werden, wobei die zwei Einlassbereiche (53, 55) mit dem Kühlmodul und mit der Bypass-Leitung verbunden sind und der Auslassbereich (51) mit dem Einlassverteiler verbunden ist.

## Revendications

1. Vanne destinée à réguler le passage d'un gaz d'une zone d'entrée (1) vers deux zones de sortie (3, 5), ou de deux zones d'entrée (53, 55) vers une zone de sortie (51), comprenant un corps (7) comportant une chambre interne (9) où le gaz d'entrée est reçu à travers les conduites d'entrée (11 ; 63, 65) et est dirigé vers les conduites de sortie (13, 15 ; 61), et un élément destiné à fermer les conduites de sortie (13, 15) ou les conduites d'entrée (63, 65), respectivement, dans laquelle
a) l'élément de fermeture est formé d'une tige (21) qui peut être actionnée axialement au moyen d'un actionneur, deux plaques (25, 27) étant réunies par un ressort (29) et pouvant être déplacées le long de la tige (21) entre deux butées (31, 33) fixées à celle-ci,
b) le corps (7) comprend des ouvertures d'entrée/de sortie (35, 37) conduisant à/provenant de la chambre (9) coopérant avec les plaques (25, 27), qui sont situées entre celles-ci, pour leur ouverture et leur fermeture, utilisant la force du ressort (29) pour fermer les ouvertures (35, 37) lorsque la vanne est fermée et utilisant le déplacement de la tige (21) dans l'un ou l'autre sens de sorte qu'une des plaques (25, 27) se déplace lorsqu'elle est tirée par une des butées (31, 33), en ouvrant une des ouvertures (35, 37) et en maintenant l'autre fermée,
**caractérisée en ce que** l'élément de fermeture comprend également un soufflet (30) relié aux deux plaques (25, 27) et démarquant une enceinte (28) avec la tige (21) à l'intérieur, et un actionneur pneumatique qui permet la création d'un vide à l'intérieur de ladite enceinte (28) de façon à réduire la dimension axiale du soufflet (30) , ce qui permet l'ouverture simultanée des deux ouvertures (35, 37) .

2. Vanne selon la revendication 1, **caractérisée en ce que** l'actionneur comporte un moyen destiné à commander l'amplitude du déplacement de la tige (21), ce qui facilite un moyen de régulation de la quantité de gaz traversant l'ouverture ouverte.

3. Vanne selon la revendication 1, **caractérisée en ce que** l'actionneur pneumatique agit sur l'enceinte (28) à travers un passage (22) agencé à l'intérieur de la tige (21) et se terminant à l'intérieur de celle-ci.

4. Vanne selon l'une quelconque des revendications précédentes, **caractérisée en ce que** le corps (7) est configuré de manière à être couplé à un échangeur de chaleur de système EGR avec un tuyau de dérivation, la zone d'entrée (1) étant raccordée au collecteur d'échappement et les zones de sortie (3, 5) au module de refroidissement et au tuyau de dérivation.

5. Vanne selon l'une quelconque des revendications 1 à 3, **caractérisée en ce que** le corps (7) est configuré de façon à être couplé à un échangeur de chaleur de système EGR avec un tuyau de dérivation, les deux zones d'entrée (53, 55) étant raccordées au module de refroidissement et au tuyau de dérivation et la zone de sortie (51) au collecteur d'admission.
